(19) Europäisches Patentamt / European Patent Office / Office européen des brevets

(11) **EP 4 407 836 A1**

(12) **EUROPEAN PATENT APPLICATION**
published in accordance with Art. 153(4) EPC

(43) Date of publication:
**31.07.2024 Bulletin 2024/31**

(21) Application number: **22872966.1**

(22) Date of filing: **22.09.2022**

(51) International Patent Classification (IPC):
**H02K 1/02** $^{(2006.01)}$  **H02K 1/22** $^{(2006.01)}$
**H02K 15/02** $^{(2006.01)}$

(52) Cooperative Patent Classification (CPC):
**H02K 1/02; H02K 1/22; H02K 15/02;** Y02T 10/64

(86) International application number:
**PCT/JP2022/035341**

(87) International publication number:
**WO 2023/048215 (30.03.2023 Gazette 2023/13)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **24.09.2021 JP 2021156023**

(71) Applicant: **Aichi Steel Corporation
Tokai-shi, Aichi 476-8666 (JP)**

(72) Inventor: **HAMADA, Norihiko
Tokai-shi, Aichi 476-8666 (JP)**

(74) Representative: **Kuhnen & Wacker
Patent- und Rechtsanwaltsbüro PartG mbB
Prinz-Ludwig-Straße 40A
85354 Freising (DE)**

(54) **CORE SHEET, ROTOR CORE, ROTOR, ELECTRIC MOTOR, AND HIGH-STRENGTH STEEL PLATE**

(57) Disclosed is an example of a material that has excellent magnetization properties and low iron loss and is provided with high tensile strength. With a core sheet (2) that is composed of a silicon steel sheet and has a wedge portion (7) protruding at a part of a boundary portion (8) between a modified portion (5) and an unmodified portion (6), high magnetization properties, low iron loss, and high strength are achieved.

FIG. 5

EP 4 407 836 A1

**Description**

[Technical Field]

The present disclosure relates to core sheets used for an electric motor or the like and relevant techniques.

[Background Art]

The rotor core of an electric motor is configured such that a large number of core sheets made of silicon steel sheets are stacked (for example, see Patent Document 1).

[Prior Art Documents]

[Patent Documents]

Patent Document 1: JP2005-130604A

[Summary of Invention]

[Technical Problem]

Core sheets are preferably made of a material that has excellent magnetization properties and low iron loss. To this end, silicon steel sheets are generally used as the core sheets. Furthermore, in a rotor core that rotates at high speed, large centrifugal force acts on each site of the core sheets. For this reason, it is desired that the core sheets should have excellent magnetization properties, low iron loss, and high tensile strength.

In view of the above points, the present specification exemplarily discloses a core sheet that is excellent in magnetic properties, electric properties (such as iron loss), mechanical properties, etc. and relevant techniques.

[Solution to Problem]

The core sheet preferably includes, for example, a silicon steel sheet (2A) having a modified portion (5) obtained by being melted together with a modifying material, and a wedge portion (7) configured such that a part of a boundary portion between the modified portion and an unmodified portion (6) of the silicon steel sheet protrudes at least on one side of the modified portion and the unmodified portion.

This allows the modified portion, which can have higher strength than the unmodified portion, to be engaged at the boundary portion via the wedge portion, and the unmodified portion is reinforced by the modified portion.

The present invention is perceived not only as the core sheet but also as a rotor core in which the core sheets are stacked, a rotor in which a permanent magnet is incorporated in the rotor core, an electric motor (including a generator) that includes the rotor and a stator provided outside or inside the rotor, etc. The "modifying material" as referred to in the present specification may be any material containing an element that is melted/mixed with the silicon steel sheet before modification (and further cooled and solidified) to form an alloy. For example, the modifying material is a mixed material, a single type of alloy material, a plurality of types of alloy materials, or the like. The form of the modifying material is not limited, and may be any of powder, foil, paste, etc.

Each of the above reference numerals in parentheses is an example representing the correspondence relationship with a specific configuration or the like described in the embodiments, which will be described later, and the present disclosure is not limited to the specific configurations or the like represented by the above reference numerals in parentheses.

[Brief Description of Drawings]

FIG. 1 is a front view of a rotor core and a core sheet according to a first embodiment.
FIG. 2 is a partially enlarged view of the rotor core and core sheet according to the first embodiment.
FIG. 3 is an enlarged view of part A of FIG. 2.
FIG. 4 is a cross-sectional view taken along line I-I of FIG. 3.
FIG. 5 is an enlarged view of part B of FIG. 4.
FIG. 6 is a cross-sectional view taken along line II-II of FIG. 3.

FIG. 7 is a diagram illustrating the structure of a silicon steel sheet after a modification step is completed.

FIG. 8 is a diagram illustrating an example of the scanning direction of a laser beam.

FIG. 9 is an explanatory diagram of a flattening step.

FIG. 10 is a table listing test results.

[Embodiments for Carrying out the Invention]

The following "embodiments of the invention" each represent an example of an embodiment that belongs to the technical scope of the present disclosure. In other words, matters or the like specifying the invention recited in the scope of claims are not limited to the specific configurations, structures, etc. described or illustrated in the following embodiments.

Direction arrows, hatchings, etc. in the figures are illustrated to facilitate understanding of the relationship between figures and the shape of each member or site. Accordingly, the invention described or illustrated in the present disclosure is not limited by the directions in the figures. Figures with hatching may not necessarily be cross-sectional views.

The number of a member or members or a site or sites that are described at least with the reference numerals is at least one, unless otherwise stated as "one" or the like. In other words, two or more members may be provided unless otherwise stated as "one" or the like. The rotor core and other components described or illustrated in the present disclosure include constitutional elements, such as members or sites that are described at least with the reference numerals, and structural sites illustrated in the figures.

(First Embodiment)

<1. Overview of Rotor Core>

A rotor core is a rotor of a rotating electric machine such as an electric motor and rotates within a stator by electromagnetic force. The rotor core according to the present embodiment is composed of core sheets made of high-strength steel according to the present disclosure.

The rotor core according to the present embodiment is a rotor core of an electric motor for traveling used in an electric vehicle. In particular, the rotor core according to the present embodiment is effective when applied as a rotor core that rotates at high speed.

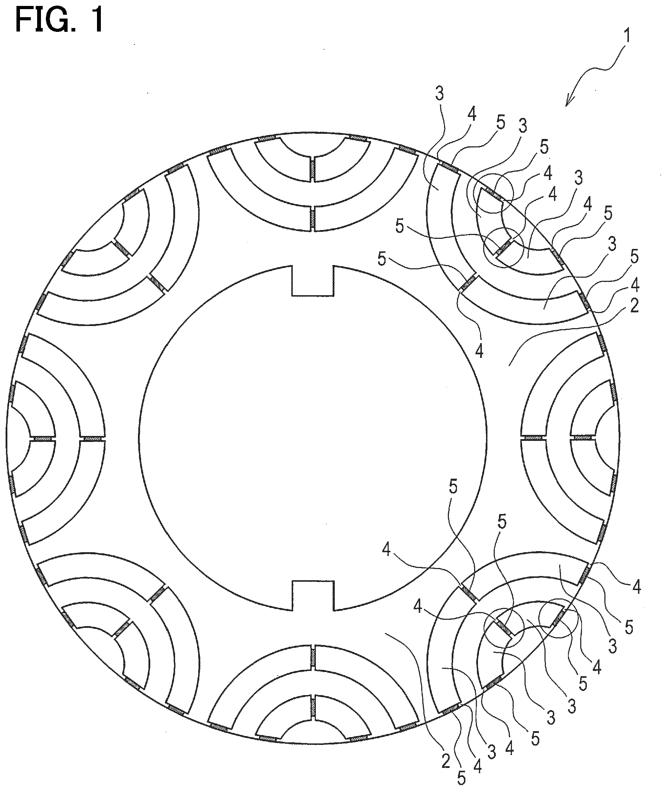

Rotor core 1 illustrated in FIG. 1 is configured such that a large number of core sheets 2 made of high-strength steel according to the present disclosure are stacked in the thickness direction. The thickness direction refers to the sheet thickness direction of each core sheet 2 (in FIG. 1, the direction perpendicular to the plane of paper).

Permanent magnets (not illustrated) are embedded in the rotor core 1. To this end, each core sheet 2 is provided with a plurality of magnet holes 3. Each magnet hole 3 is a through-hole in which the permanent magnet is embedded. The type of permanent magnet embedded in each magnet hole 3 and the embedding scheme are not limited.

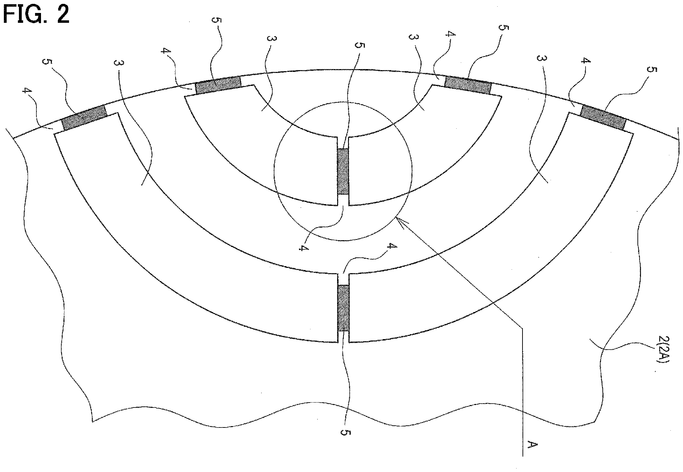

As illustrated in FIGS. 1 and 2, bridge portions 4 are provided at sites of each core sheet 2 that are adjacent to the magnet holes 3. Each bridge portion 4 is a site of the core sheet 2 that has a portion whose magnetic permeability is lower than other sites, that is, a site that has at least a modified portion 5.

<2. Structure of Core Sheet>

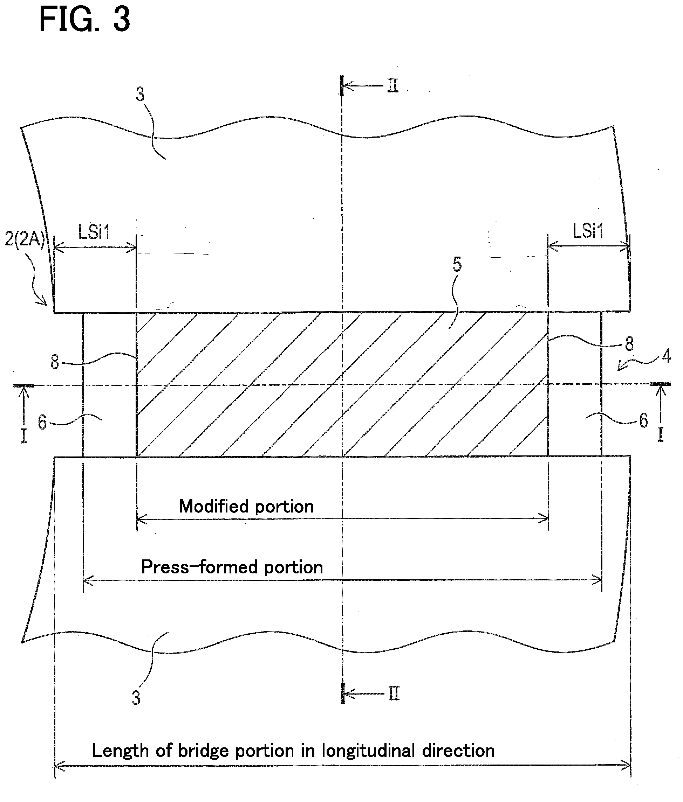

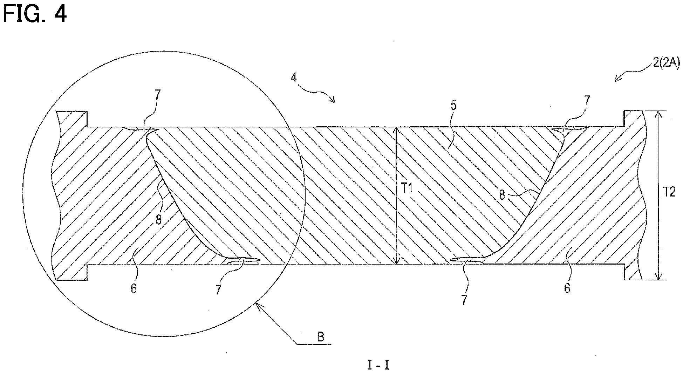

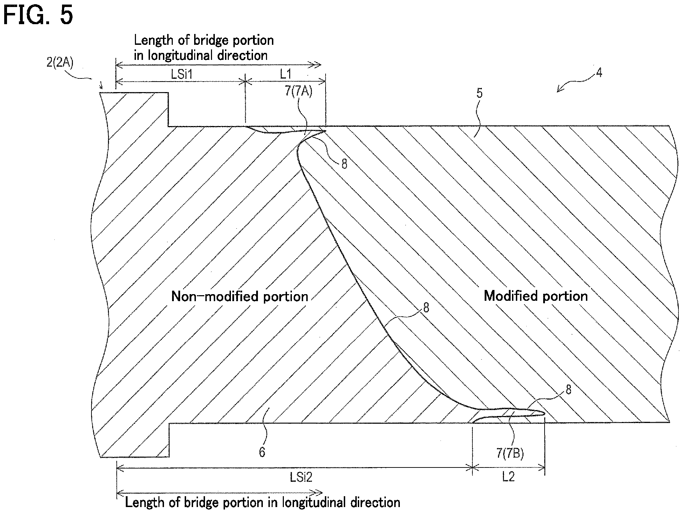

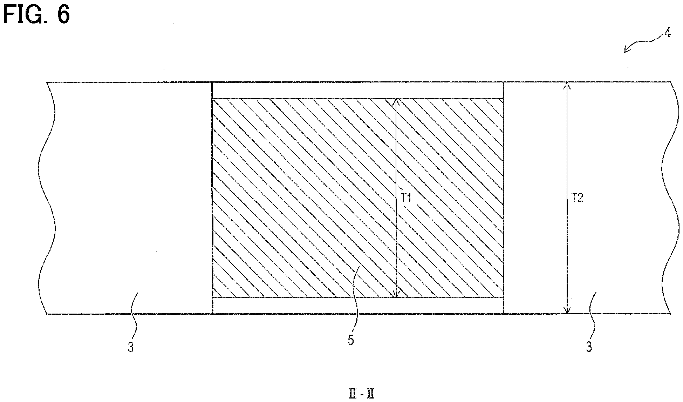

FIG. 3 illustrates a bridge portion 4 (e.g., part A of FIG. 2). FIG. 4 illustrates a cross section taken along line I-I of FIG. 3. FIG. 5 is an enlarged view of part B in FIG. 4. FIG. 6 illustrates a cross section taken along line II-II of FIG. 3. Hereinafter, the direction parallel to the I-I cross section of FIG. 3 will be referred to as a longitudinal direction of the bridge portion 4. The direction parallel to the II-II cross section of FIG. 3 will be referred to as a width direction of the bridge portion 4.

The width direction of the bridge portion 4 is a direction that connects adjacent spaces with the bridge portion 4 in between. Such a space refers to a magnet hole 3 or the outer space of the core sheet 2. The longitudinal direction of the bridge portion 4 is a direction orthogonal to the width direction of the bridge portion 4.

The base material of a core sheet 2 is a silicon steel sheet 2A. Modified portions 5 are partially provided in the silicon steel sheet 2A. The modified portions 5 are modified sites that are melted together with a modifying material (one or more elements for modification (metals (alloys, pure metals), nonmetals, compounds, mixtures, etc.) and then solidified.

Specifically, the modified portions 5 are formed by irradiating them with a beam such as a laser beam or an electron beam to melt and modify them using powder such as "50Ni50Cr (available from NIPPON WELDING ROD CO., LTD)" as the modifying material. The modified portions 5 are sites (non-magnetic portions, low magnetic portions) whose magnetic permeability is lower than other sites. Each modified portion 5 constitutes at least a part of a bridge portion 4.

As illustrated in FIG. 5, at least one wedge portion 7 is provided at a boundary portion 8 between a modified portion 5 and an unmodified portion 6 in the silicon steel sheet 2A (bridge portion 4 in the present embodiment) (in FIG. 5, two wedge portions 7 are provided). Each wedge portion 7 is a site in which a part of the boundary portion 8 protrudes at least on one side of the modified portion 5 and the unmodified portion 6. When collectively referring to two wedge portions 7A and 7B, they will be referred to as wedge portions 7, hereinafter.

In the present embodiment, the wedge portions 7 are provided on the front surface side and back surface side of the silicon steel sheet 2A in the boundary portion 8. The wedge portion 7A on the front surface side and the wedge portion 7B on the back surface side both protrude from the boundary portion 8 toward the modified portion 5 side. The front surface side refers to the beam incidence side. The back surface side refers to the side opposite to the front surface side.

The wedge portions 7 according to the present embodiment are provided only on the front surface side and back surface side on one end side of a bridge portion 4 in the longitudinal direction (left end side of FIG. 4) and the other end side of the bridge portion 4 in the longitudinal direction (right end side of FIG. 4), and are not provided at other sites such as intermediate sites between the front surface and the back surface.

In the present embodiment, the boundary portion 8 and the wedge portions 7 are absent on one end side of the bridge portion 4 in the width direction (left end side of FIG. 6) and the other end side of the bridge portion 4 in the width direction (right end side in FIG. 6). In the width direction of the modified portion 5, the modified portion 5 is configured to be present in the entire width direction (see FIG. 6).

This is because, as will be described later, in the present embodiment, the outer edge shapes of the magnet holes 3 and core sheet 2 are formed by a punching removal process or a final punching step after modification.

That is, in the present embodiment, during the punching removal process or the final punching step, the boundary portion 8 and a part of the modified portion 5 that are present on each of one end side and the other end side of the bridge portion 4 in the width direction are removed, and the modified portion 5 is therefore configured to be present in the entire width direction.

Regarding dimensions Lsi 1 and Lsi2 and dimensions L1 and L2 illustrated in FIG. 5, it is desired that the following relationships should be established.

$$0 \leq Lsi1/L1 \leq 49 \ ...\text{Relational Expression 1}$$

$$0 \leq Lsi2/L2 \leq 49 \ ...\text{Relational Expression 2}$$

The dimension L1 refers to the protruding length of the wedge portion 7A. The dimension L2 refers to the protruding length of the wedge portion 7B. The wedge portions 7A and 7B exist continuously in the width direction of the bridge portion 4 and fluctuate in the longitudinal direction of the bridge portion 4, and their protruding lengths are not the same length. Therefore, the above L1 and L2 represent the average protruding lengths of the wedge portions 7A and 7B, respectively.

The dimensions Lsi1 and Lsi2 refer to the lengths from respective sites of the boundary portion 8 to an end portion of the bridge portion 4 in the longitudinal direction. Here, the width direction of a magnet hole 3 is a direction parallel to the longitudinal direction of the bridge portion 4. In other words, the dimension of the bridge portion 4 in the longitudinal direction matches the dimension of the magnet hole 3 in the width direction. That is, the end portion of the bridge portion 4 in the longitudinal direction is a position corresponding to the end portion of the magnet hole 3 in the width direction.

The dimensions Lsi1 and Lsi2 are different at sites of the bridge portion 4 in the width direction. In the present embodiment, therefore, the average values in the entire width direction of the bridge portion 4 are used as the dimensions Lsi1 and Lsi2.

As illustrated in FIG. 4, the bridge portion 4 according to the present embodiment has a recessed shape that is depressed from the front and back surfaces at least at sites where the modified portion 5 including the wedge portions 7A and 7B is provided. In other words, a thickness dimension T1 of the recessed portion is smaller than a thickness dimension T2 of other sites.

Accordingly, when the core sheets 2 are stacked, the modified portions 5 of adjacent core sheets 2 are not in contact with each other. The range where the thickness dimension is T1, that is, the outer edge of the recessed portion, is located at a position shifted by a predetermined dimension from the boundary portion 8 toward the end portion side of the bridge portion 4 in the longitudinal direction.

<3. Example of Method of Manufacturing Core Sheet (High-Strength Steel)>

The manufacture of a core sheet 2 (in particular, the wedge portions 7) is generally executed in the following procedure.

That is, the core sheet 2 is manufactured in the order of a modifying material placement step → a modification step → a punching removal step → a flattening step → a final punching step.

Before the modifying material placement step, a silicon steel sheet that is the base material is prepared. Electrically insulation coatings are previously provided on the front and back surfaces of the silicon steel sheet 2A constituting the base material.

In the modifying material placement step, the modifying material is placed on a site corresponding to the modified portion 5. Specifically, in the modifying material placement step, the modifying material is placed using a levelling method. For this reason, the modified portion 5 has not yet been formed at the time when the modifying material placement step is performed.

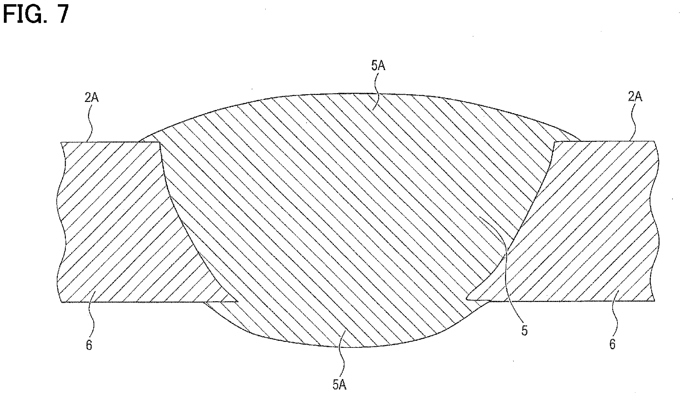

In the modification step, at least the site where the modifying material is placed is irradiated with a laser beam to melt the site. At this time, the molten site, that is, the modified portion 5, has a shape that swells from the front and back surfaces of the base material (silicon steel sheet 2A), as illustrated in FIG. 7, and the magnetic permeability decreases as compared to the unmodified portion 6.

The temperature of the front surface of the base material (silicon steel sheet 2A), that is, the laser beam incident side, is more likely to rise than the back surface. The boundary portion 8 is therefore in a state of being inclined with respect to the thickness direction so that the range of the modified portion 5 decreases as it approaches the back surface.

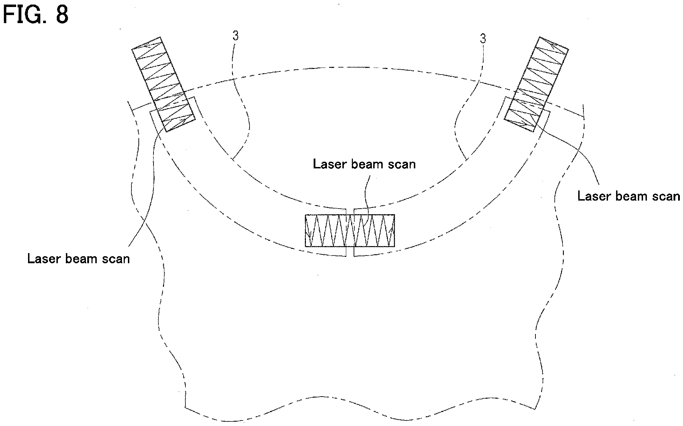

As illustrated in FIG. 8, the laser beam is applied to, in addition to the site corresponding to the modified portion 5, the site corresponding to a part of the magnet hole 3 and the site corresponding to the outer space of the core sheet 2, that is, the sites to be finally removed.

The laser beam is scanned in a direction approximately parallel to the width direction of the bridge portion 4, for example, while being scanned at high speed in a direction approximately parallel to the longitudinal direction of the bridge portion 4. Therefore, the laser beam irradiation start site and the laser beam irradiation end site are finally removed.

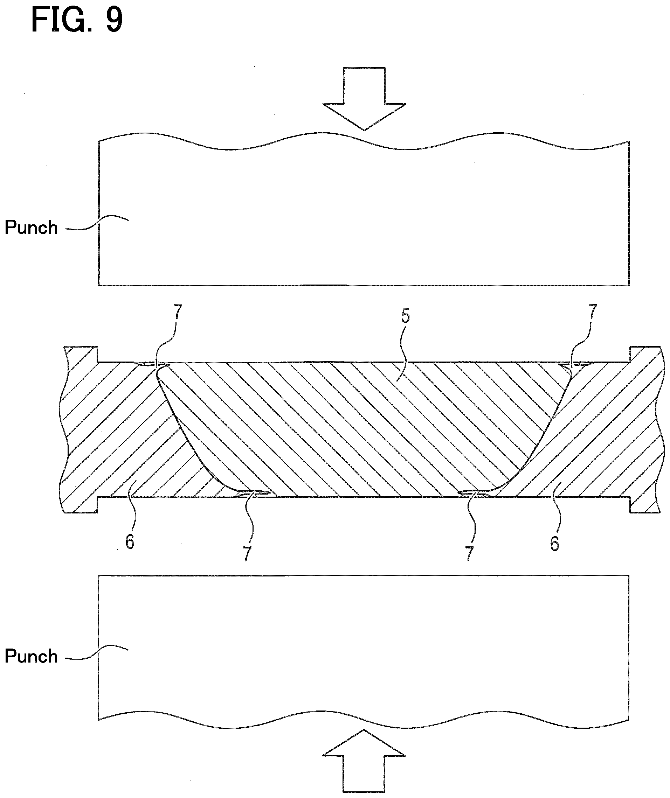

In the punching removal step, at least the site irradiated with the laser beam and melted in the site corresponding to a part of the magnet hole 3 is removed by press processing or the like. In the flattening step, as illustrated in FIG. 9, swelling portions 5A (see FIG. 7) generated in the modification step are pressed with a press machine.

This allows at least the swelling portions 5A to be in a recessed shape that is depressed from the front and back surfaces of the base material, and the thickness dimension T1 becomes smaller than the thickness dimension T2 of other sites (see FIG. 4). At this time, a part of the modified portion 5 and a part of the unmodified portion 6 undergo plastic flow, and the wedge portions 7 are formed at the boundary portions 8.

The electrical insulation coating may be destroyed when irradiated with the laser beam. In the flattening step, therefore, press processing is performed so that at least the area irradiated with the laser beam has a depressed shape. Then, in the final punching step, the dimensions and shape of the magnet holes 3, the outer dimensions and outer shape of the core sheet 2, etc. are adjusted.

<4. Features of Core Sheet according to Present Embodiment>

In the core sheets 2 according to the present embodiment, that is, in the core sheets 2 and rotor core 1 using high-strength steel sheets, the wedge portions 7 each configured such that a part of the boundary portion 8 protrudes allow the reduction in cross-sectional area to be suppressed in the unmodified portion 6 whose tensile strength is lower than the modified portion 5. In the unmodified portion 6, therefore, the stress increase due to reduction in the cross-sectional area is suppressed, so the tensile strength of the high-strength steel sheets can be improved.

The silicon steel sheets have excellent magnetization properties and low iron loss. Therefore, the core sheets 2 (high-strength steel sheets) have excellent magnetization properties and low iron loss, and can exhibit high tensile strength. By using such core sheets 2, it is possible to obtain the rotor core 1 that can rotate at high speed.

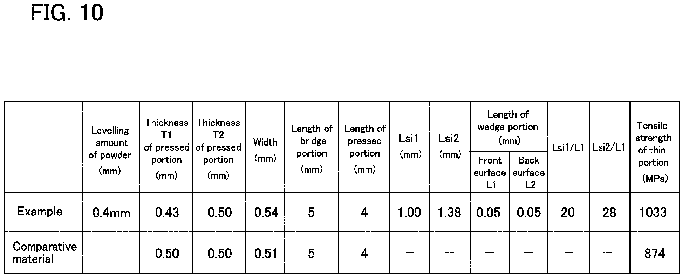

The table illustrated in FIG. 10 lists the tensile strength test results of the high-strength steel sheets according to the present embodiment. As listed in the table illustrated in FIG. 10, the example including the wedge portions 7 has improved tensile strength as compared to the comparative material. The comparative material is composed only of silicon steel with no modified portions.

Moreover, the sites provided with the modified portions 5 including at least the wedge portions 7A and 7B are in a recessed shape that is depressed from the front and back surfaces. When the core sheets 2 are stacked, therefore, the modified portions 5 of adjacent core sheets 2 are not in contact with each other. Thus, it is possible to ensure electrical insulation between adjacent core sheets 2 without repairing the electrical insulation coating destroyed during the modification.

(Other Embodiments)

The method of manufacturing the core sheet according to the above-described embodiment does not include a step of repairing the electrical insulation coating destroyed during the modification. However, the present disclosure is not limited thereto. That is, in the present disclosure, for example, an insulation coating formation step may be provided after the flattening step.

The method of manufacturing the core sheet according to the above-described embodiment includes the punching removal step and the finishing punching step. However, the present disclosure is not limited thereto. That is, in the present disclosure, for example, the punching removal step may be omitted and only the final punching process may be performed.

In the above-described embodiment, the wedge portions 7 are provided at the boundary portion 8 by utilizing the plastic flow of a part of the material in the flattening process. However, the present disclosure is not limited thereto. That is, in the present disclosure, for example, the wedge portions 7 may be provided by other schemes.

In the above-described embodiment, the wedge portions 7 are configured to be provided on the front surface side and the back surface side. However, the shape and positions of the wedge portions are not limited to those disclosed in the above-described embodiment. That is, the present disclosure may be, for example, a high-strength steel sheet or core sheet having a wedge portion protruding from the boundary portion 8 toward the modified portion 5 side or the unmodified portion 6 side in the intermediate portion in the thickness direction.

In the modifying material placement step according to the above-described embodiment, the modifying material is placed using a levelling method. However, the present disclosure is not limited thereto. That is, in the present disclosure, for example, the modifying material may be placed by applying a liquid mixed with the modifying material.

In the above-described embodiment, the recessed shape is depressed from the front and back surfaces. However, the present disclosure is not limited thereto. That is, the present disclosure may have a recessed shape in which, for example, only the front or back surface is depressed. When an insulation coating formation step is provided after the flattening step, both the front and back surfaces may be flat surfaces without depressions.

In the above-described embodiment, high-strength steel sheets are applied to the core sheets 2 of the rotor core 1. However, the present disclosure is not limited thereto. That is, the high-strength steel sheets according to the present disclosure are applicable to other uses as well.

In the modification step according to the above-described embodiment, since only one surface is irradiated with the laser beam, the boundary portion 8 is in a state of being inclined with respect to the thickness direction. However, the present disclosure is not limited thereto. That is, in the present disclosure, the modification may be performed such that, for example, both surfaces are irradiated with the laser beam.

The modified portion 5 according to the above-described embodiment has a structure that penetrates from the front surface to the back surface. However, the present disclosure is not limited thereto. That is, the present disclosure may have a configuration in which, for example, the modified portion 5 does not penetrate to the back surface.

In the above embodiment, the base material is melted together with the modifying material to modify some positions of the base material. However, the present disclosure is not limited thereto. That is, in the present disclosure, since it is sufficient that the wedge portions 7 are at the boundary portion 8, for example, the base material may be melted to form the swelling portions 5A without placing the modifying material, and wedge portions 7 may be formed by press processing.

Further, the present disclosure is not limited to the above-described embodiments, provided that it conforms to the spirit of the disclosure described in the above-described embodiments. Possible configurations therefore include those in which at least two of the above-described embodiments are combined and those in which any one of the illustrated configurations or the configurations described with the reference numerals is omitted in the above-described embodiments.

[Description of Reference Numerals]

2   Core sheet
2A   Silicon steel sheet
3   Magnet hole
4   Bridge portion
5   Modified portion
5A   Swelling portion
6   Unmodified portion
7   Wedge portion
8   Boundary portion

**Claims**

1.  A core sheet for an electric motor, comprising:

    a silicon steel sheet having a modified portion obtained by being melted together with a modifying material; and
    a wedge portion configured such that a part of a boundary portion between the modified portion and an unmodified portion of the silicon steel sheet protrudes at least on one side of the modified portion and the unmodified portion.

2.  The core sheet according to claim 1, wherein the modified portion is provided in at least a part of a region that becomes a bridge portion of a rotor core.

3.  A rotor core obtained by stacking a plurality of core sheets according to claim 1 or 2.

4.  A rotor comprising:

    the rotor core according to claim 3; and
    a permanent magnet embedded in a magnet hole of the rotor core.

5.  An electric motor comprising:

    the rotor according to claim 4; and
    a stator.

6.  A high-strength steel sheet comprising:

    a silicon steel sheet having a modified portion obtained by being melted together with a modifying material; and
    a wedge portion configured such that a part of a boundary portion between the modified portion and an unmodified portion of the silicon steel sheet protrudes at least on one side of the modified portion and the unmodified portion.

# FIG. 1

FIG. 2

# FIG. 3

Modified portion

Press-formed portion

Length of bridge portion in longitudinal direction

FIG. 4

I - I

# FIG. 5

Length of bridge portion
in longitudinal direction

2(2A)

LSi1    L1

7(7A)

5    4

8

Non-modified portion    Modified portion

8

8

6    7(7B)    L2

LSi2

Length of bridge portion in longitudinal direction

FIG. 6

II - II

## FIG. 7

FIG. 8

Laser beam scan

Laser beam scan

Laser beam scan

# FIG. 9

FIG. 10

| | Levelling amount of powder (mm) | Thickness T1 of pressed portion (mm) | Thickness T2 of pressed portion (mm) | Width (mm) | Length of bridge portion (mm) | Length of pressed portion (mm) | Lsi1 (mm) | Lsi2 (mm) | Length of wedge portion (mm) | | Lsi1/L1 | Lsi2/L1 | Tensile strength of thin portion (MPa) |
|---|---|---|---|---|---|---|---|---|---|---|---|---|---|
| | | | | | | | | | Front surface L1 | Back surface L2 | | | |
| Example | 0.4mm | 0.43 | 0.50 | 0.54 | 5 | 4 | 1.00 | 1.38 | 0.05 | 0.05 | 20 | 28 | 1033 |
| Comparative material | | 0.50 | 0.50 | 0.51 | 5 | 4 | — | — | — | — | — | — | 874 |

## INTERNATIONAL SEARCH REPORT

| International application No. |
|---|
| **PCT/JP2022/035341** |

**A. CLASSIFICATION OF SUBJECT MATTER**

*H02K 1/02*(2006.01)i; *H02K 1/22*(2006.01)i; *H02K 15/02*(2006.01)i
FI: H02K1/02 Z; H02K1/22 Z; H02K15/02 K

According to International Patent Classification (IPC) or to both national classification and IPC

**B. FIELDS SEARCHED**

Minimum documentation searched (classification system followed by classification symbols)

H02K1/02; H02K1/22; H02K15/02

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2011-87360 A (TOYOTA MOTOR CORP) 28 April 2011 (2011-04-28) paragraphs [0018]-[0032], [0037], fig. 3-9, 11 | 1, 6 |
| Y | | 2-5 |
| Y | JP 2015-201997 A (DAIKIN IND LTD) 12 November 2015 (2015-11-12) paragraphs [0022]-[0030], fig. 1-2 | 2-5 |
| A | JP 2011-67027 A (TOYOTA MOTOR CORP) 31 March 2011 (2011-03-31) paragraphs [0025]-[0029], fig. 1-4 | 1-6 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **22 November 2022** | **06 December 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
**Information on patent family members**

International application No.

**PCT/JP2022/035341**

| Patent document cited in search report | | | Publication date (day/month/year) | Patent family member(s) | Publication date (day/month/year) |
|---|---|---|---|---|---|
| JP | 2011-87360 | A | 28 April 2011 | (Family: none) | |
| JP | 2015-201997 | A | 12 November 2015 | (Family: none) | |
| JP | 2011-67027 | A | 31 March 2011 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005130604 A